# EUROPÄISCHE PATENTSCHRIFT

(11) **EP 0 558 796 B1**
(45) Veröffentlichungstag und Bekanntmachung des Hinweises auf die Patenterteilung: **26.06.1996**
(21) Anmeldenummer: 92116969.4
(22) Anmeldetag: 05.10.1992
(51) Int. Cl.: G01S 3/784

(54) **Optischer Sensorkopf**
Optical sensor head
Senseur optique

(30) Priorität: 29.02.1992 DE 4206357
(43) Veröffentlichungstag der Anmeldung: 08.09.1993
(73) Patentinhaber: Daimler-Benz Aerospace Aktiengesellschaft, D-81663 München (DE)
(72) Erfinder: Poisel, Hans, Dr., W-8505 Röthenbach (DE); Rothkirch, Norbert, W-8000 München 83 (DE); Trommer, Gert, Dr., W-8000 München 40 (DE)

(56) Entgegenhaltungen:
- EP-A- 0 269 790
- DE-A- 3 736 616
- FR-A- 2 038 802

## Beschreibung

Die Erfindung bezieht sich auf einen optischen Sensorkopf zur richtungsabhängigen Erfassung optischer Strahlung nach dem Oberbegriff des Patentanspruchs 1.

Bekannte Sensorköpfe dieser Art (DE 37 36 616 C1). deren optische Achsen konvergent auf einen vor den Lichteintrittsöffnungen der Einzeloptiken liegenden Schnittpunkt ausgerichtet sind, besitzen gegenüber solchen mit nach rückwärts konvergierender Achsgeometrie erhebliche konstruktive Vorteile, vor allem weil sie eine flache Bauweise des Sensorkopfes und eine äußerst dichte Positionierung der Lichteintrittsöffnungen auf der vorderen Sensorkopffläche ermöglichen, sind aber für Anwendungen ungeeignet, in denen eine exakte Begrenzung des Sensorkopf-Gesichtsfeldes auf einen definierten Winkelbereich gefordert wird, wie dies z.B. der Fall ist, wenn für eine Rundum-Beobachtung mehrere, jeweils auf unterschiedliche Beobachtungssektoren ausgerichtete Sensorköpfe vorgesehen sind und sichergestellt werden muß, daß jeder Beobachtungssektor nur von dem ihm zugeordneten Sensorkopf lückenlos erfaßt wird, Überlappungen an den Sektorgrenzen jedoch, die eine eindeutige Richtungsbestimmung der in diesem Bereich einfallenden optischen Strahlung schwierig bis unmöglich machen, vermieden werden müssen.

Aufgabe der Erfindung ist es, einen Sensorkopf der eingangs genannten Art so auszubilden, daß er unter Beibehalt einer einfachen Bau- und Funktionsweise eine genaue Begrenzung eines vorgegebenen Winkelbereichs garantiert.

Diese Aufgabe wird erfindungsgemäß durch den im Patentanspruch 1 gekennzeichneten Sensorkopf gelöst.

Die Erfindung beruht auf der Erkenntnis, daß sich eine winkelgenaue Begrenzung des Sensorkopf-Beobachtungsbereiches nicht allein durch eine partielle Abschattung der randäußeren Einzeloptiken erzielen läßt, überraschenderweise aber mit geringem Bauaufwand durch eine Kombination einer solchen Abschattung mit der beanspruchten Anhebung der weiter innenliegenden Einzeloptiken, ohne daß dadurch die Funktionsfähigkeit des Sensorkopfes in dem so eingegrenzten Beobachtungssektor störend beeinflußt wird. Der erfindungsgemäße Sensorkopf eignet sich in hervorragender Weise für den oben geschilderten Anwendungsfall, bei dem zur Sicherstellung einer eindeutigen Winkeldetektion der empfangenen optischen Strahlung störende Grenzüberlappungen zwischen benachbarten, jeweils von einem Sensorkopf überwachten Beobachtungssektoren unterbunden werden müssen.

In besonders bevorzugter Ausgestaltung der Erfindung ist die optische Achse der weiter innenliegenden Nachbaroptik(en) unter Berücksichtigung des Sehkegel-Öffnungswinkels derart geneigt, daß die unteren Sehkegel-Randstrahlen ohne Blendenbegrenzung im wesentlichen neigungsgleich zu den blendenbegrenzten Randstrahlen der außenrandseitigen Einzeloptik verlaufen, so daß der Sehbereich der Nachbaroptik(en) durch die Blendenanordnung im wesentlichen uneingeschränkt erhalten bleibt.

In besonders einbaugünstiger Weise wird die Strahlblende gemäß Anspruch 3 vorzugsweise außerhalb der mit den Einzeloptiken belegten Sensorkopffläche angeordnet, so daß sie sich problemlos am Sensorkopf unterbringen läßt, ohne die enge gegenseitige Positionierung der Lichteintrittsöffnungen an der vorderen Sensorkopffläche zu stören.

Im Hinblick auf eine lückenlose Abdeckung des Beobachtungssektors mit möglichst wenigen, mit ihren Sehkegeln gleichförmig verteilten Einzeloptiken empfiehlt es sich gemäß Anspruch 4, den Sehkegel der außenrandseitigen Einzeloptik durch die Blendenanordnung bis zur Höhe der optischen Achse abzuschatten.

Zum Schutz gegen störende Reflexe und/oder Strahlstreuungen besitzt die Strahlblende gemäß Anspruch 5 zweckmäßigerweise eine reflexionsmindernde Oberflächenstruktur und/oder -beschaffenheit, nämlich vorzugsweise eine Sägezahnstruktur nach Anspruch 6 und/oder eine strahlungsabsorbierende Oberflächenbeschichtung nach Anspruch 7.

Nach Anspruch 8 besteht eine zur Überwachung des blendenbegrenzten Beobachtungssektors baulich und funktionsmäßig besonders bevorzugte Achsgeometrie darin, daß die optischen Achsen der Einzeloptiken zentrisch auf die Mittelachse des Sensorkopfes ausgerichtet sind.

In weiterer vorteilhafter Ausgestaltung der Erfindung sind die Einzeloptiken gemäß Anspruch 9 über Lichtleitfasern mit einem opto-elektrischen Wandler verbunden, der die richtungsabhängigen Empfangssignale einer elektronischen Auswerteschaltung zur Winkeldetektion zuführt.

Gemäß Anspruch 10 schließlich erstreckt sich der blendenbegrenzte Sichtbereich des Sensorkopfes vorzugsweise über einen Raumwinkel von 90°, so daß sich mit vier, überlappungsfrei aneinandergrenzenden Sensorköpfen eine azimutale Vollkreisüberwachung erreichen läßt.

Die Erfindung wird nunmehr anhand eines Ausführungsbeispieles in Verbindung mit den Zeichnungen näher erläutert. Es zeigen in stark schematisierter Darstellung:
- **Fig. 1**: eine perspektivische Darstellung eines aus mehreren blendenbegrenzten Sensorköpfen bestehenden Laserwarngeräts; und
- **Fig. 2**: einen Schnitt eines der Sensorköpfe gem. Fig. 1 längs der Linie I-I.

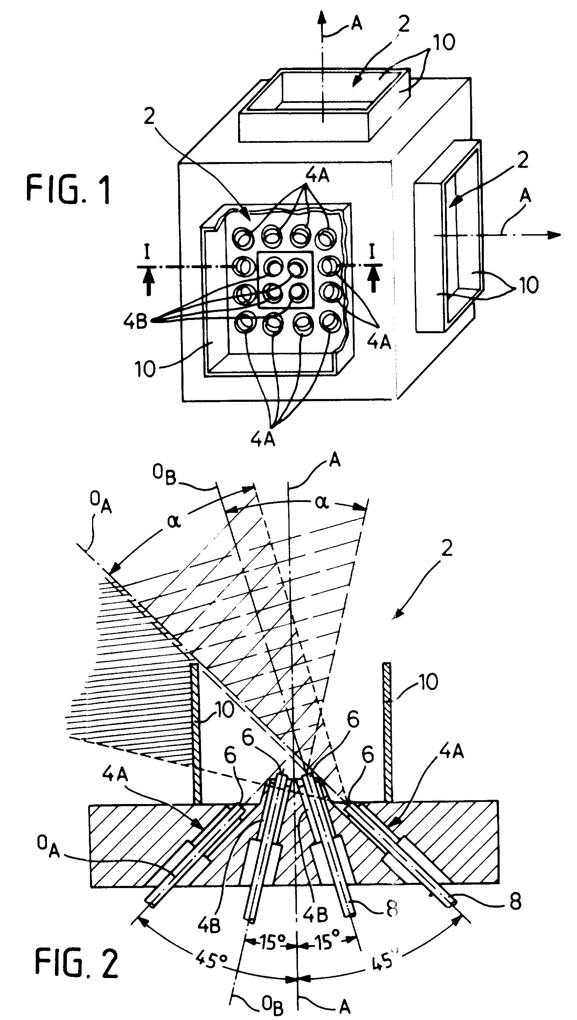

Das in Fig. 1 gezeigte Laserwarngerät besteht aus mehreren optischen Sensorköpfen 2, denen jeweils einer von mehreren aneinandergrenzenden Beobachtungssektoren zugewiesen ist.
Jeder Sensorkopf 2 ist aus einer Vielzahl von Einzeloptiken 4 zusammengesetzt, die symmetrisch zur zentralen Sensorkopfachse A angeordnet und mit ihren optischen Achsen O zu dieser zentrisch und in Sehrichtung konvergierend ausgerichtet sind. Die Einzeloptiken 4 besitzen jeweils einen sich von der Lichteintrittsöffnung 6 aus kreiskegelförmig unter einem der numerischen Apertur entsprechenden Öffnungswinkel α erweiterten Sichtbereich, und ihre optischen Achsen O sind unter Berücksichtigung des Öffnungswinkels α derart geneigt, daß sich die einzelnen Sehkegel innerhalb des dem Sensorkopf 2 zugeordneten Beobachtungssektors teilweise überlappen und diesen lückenlos abdecken. Bei dem gezeigten Ausführungsbeispiel beträgt der Sehkegel-Öffnungswinkel α= 30°, und die außenrandseitigen Einzeloptiken 4 A sind gegenüber der Sensorkopfachse A in der in Fig. 2 gezeigten Schnittebene um 45°, die der Sensorkopfmitte näher gelegenen Nachbaroptiken 4B jeweils um 15° geneigt.

Ein von einer Optik 4 erfaßter Laserstrahl wird über eine zugeordnete Lichtleitfaser 8 an einen (nicht gezeigten) opto-elektrischen Wandler übertragen und dort in ein sich entsprechend dem Einfallwinkel bezüglich der optischen Achse O änderndes Analog- oder Digitalsignal umgewandelt, welches einer (ebenfalls nicht gezeigten) Auswerteschaltung zur Winkeldetektion zugeführt wird.

Aus Gründen einer eindeutigen Winkelbestimmung müssen störende Sichtüberlappungen zwischen den Beobachtungssektoren benachbarter Sensorköpfe 2 verhindert werden. Für die in Fig. 1 gezeigte Orthogonalausrichtung der Sensorkopfachsen A bedeutet dies, daß sich jeder Beobachtungssektor in Richtung der benachbarten Sensorköpfe 2 über einen Winkelbereich von 45° bezüglich der Sensorkopfachse A erstreckt, also sowohl in der Schnittebene der Fig. 2 als auch hierzu senkrecht einen Raumwinkel von insgesamt 90° abdeckt. Zur winkelgenauen Begrenzung der Beobachtungssektoren sind am Sensorkopf 2 außerhalb des mit den Einzeloptiken 4 belegten Sensorkopffeldes Strahlblenden 10 vorgesehen, welche die Sehkegel der außenrandseitigen, unter 45° geneigten Einzeloptiken 4A jeweils bis zur Höhe ihrer optischen Achse O_{A} abschatten und zusätzlich sind die zur Sensorkopfmitte hin benachbarten, um 15° geneigten Einzeloptiken 4B mit ihren Lichteintrittsöffnungen 6 bis zur Höhe der blendenbegrenzten Randstrahlen der äußeren Optiken 4A angehoben, also in Höhe der optischen Achsen O_{A} angeordnet, derart, daß ihre - in Fig. 2 gestrichelt schraffierten - Sehkegel im wesentlichen ohne Blendenabschattung bleiben und daher mit ihren unteren Randstrahlen konform zur 45°-Sektorgrenzfläche verlaufen. Auf diese Weise wird sichergestellt, daß der Beobachtungssektor des Sensorkopfes 2 ohne Beeinträchtigung der Funktionsfähigkeit mit hoher Genauigkeit auf den vorgegebenen Winkelbereich eingegrenzt wird.

Zur Vermeidung störender Streulicht- und Reflexionswirkungen besitzen die Strahlblenden 10 eine reflexionsmindernde, etwa sägezahnförmige Oberflächenstruktur und/oder sind mit einer strahlungsabsorbierenden Oberflächenbeschichtung, etwa einem Matt-Lack-Anstrich, überzogen.

Die beschriebene Sektorbegrenzung ist selbstverständlich auch bei Optiken mit anderen Achsneigungen und Sehkegelöffnungswinkeln und für anders vorgegebene Beobachtungswinkel verwendbar. So ist es beispielsweise möglich, den Beobachtungssektor lediglich in Richtung der in Fig. 2 gezeigten Schnittebene durch eine Blendenanordnung 10 einzugrenzen, senkrecht hierzu aber unbegrenzt zu lassen.

## Patentansprüche

1. Optischer Sensorkopf zur richtungsabhängigen Erfassung optischer Strahlung, bestehend aus einer Anordnung von mit ihren optischen Achsen unterschiedlich geneigten, in Sehrichtung konvergent ausgerichteten Einzeloptiken mit jeweils kegelförmigen, sich teilweise überlappenden Sehbereichen,
**dadurch gekennzeichnet, daß**
zumindest eine außenrandseitige Einzeloptik (4A) des Sensorkopfes (2) mit einer den zugeordneten Sehkegel partiell abschattenden Strahlblende (10) versehen und die der Sensormitte näher gelegene Nachbaroptik (4B) mit ihrer Lichteintrittsöffnung (6) etwa in Höhe der blendenbegrenzten Randstrahlen der außenrandseitigen Einzeloptik angeordnet ist.

2. Sensorkopf nach Anspruch 1,
**dadurch gekennzeichnet, daß**
die optische Achse (O_{B}) der Nachbaroptik (4B) unter Berücksichtigung des Sehkegel-Öffnungswinkels ( α ) derart geneigt ist, daß die unteren Sehkegel-Randstrahlen ohne Blendenbegrenzung im wesentlichen neigungsgleich zu den blendenbegrenzten Randstrahlen der außenrandseitigen Optik (4A) verlaufen.

3. Sensorkopf nach Anspruch 1 oder 2,
**dadurch gekennzeichnet, daß**
die Strahlblende (10) sich außerhalb der mit den Einzeloptiken (4) belegten Sensorkopffläche befindet.

4. Sensorkopf nach einem der vorhergehenden Ansprüche,
**dadurch gekennzeichnet, daß**
der Sehkegel der außenrandseitigen Einzeloptik (4A) durch die Strahlblende (10) bis zur Höhe der optischen Achse (O_{A}) abgeschattet ist.

5. Sensorkopf nach einem der vorhergehenden Ansprüche,
**dadurch gekennzeichnet, daß**
die Strahlblende (10) eine reflexionsmindernde Oberflächenstruktur und/oder -beschaffenheit besitzt.

6. Sensorkopf nach Anspruch 5,
**dadurch gekennzeichnet, daß**
die Strahlblende (10) eine sägezahnförmige Oberflächenstruktur aufweist.

7. Sensorkopf nach Anspruch 5 oder 6,
**dadurch gekennzeichnet, daß**
die Strahlblende (10) mit einer strahlungsabsorbierenden Oberflächenbeschichtung versehen ist.

8. Sensorkopf nach einem der vorhergehenden Ansprüche,
**dadurch gekennzeichnet, daß**
die optischen Achsen (O) der Einzeloptiken (4) zentrisch auf die Mittelachse (A) des Sensorkopfes (2) ausgerichtet sind.

9. Sensorkopf nach einem der vorhergehenden Ansprüche,
**dadurch gekennzeichnet, daß**
die Einzeloptiken (4) über Lichtleitfasern (8) mit einem opto-elektrischen Wandler verbunden sind.

10. Sensorkopf nach einem der vorhergehenden Ansprüche,
**dadurch gekennzeichnet, daß**
der blendenbegrenzte Gesamtsichtbereich des Sensorkopfes (2) sich über einen Raumwinkel von etwa 90° erstreckt.

## Claims

1. An optical sensor head for the direction-dependent detection of optical radiation, consisting of an arrangement of individual optics convergently aligned in the direction of sighting and with their optical axes differently inclined, each with conical, partially overlapping sighting regions, **characterised in that** at least one individual optic (4A) at the outer edge of the sensor head (2) is provided with a radiation screen (10) which partially obscures the associated cone of vision and the adjacent optic (4B) placed nearer the middle of the sensor is disposed with its light entry aperture (6) approximately at the height of the screen-delimited edge rays of the individual optic at the outer edge.

2. A sensor head according to claim 1,
**characterised in that** the optical axis (O_{B}) of the adjacent optic (4B) is inclined, taking into consideration the aperture angle (α) of the cone of vision, in such a way that the lower edge rays of its cone of vision, without screen delimitation, travel substantially with the same inclination as the screen-delimited edge rays of the optic (4A) at the outer edge.

3. A sensor head according to claim 1 or 2,
**characterised in that** the radiation screen (10) is situated outside the sensor head area occupied by the individual optics (4).

4. A sensor head according to any one of the preceding claims,
**characterised in that** the cone of vision of the individual optic (4A) at the outer edge is obscured by the radiation screen (10) up to the height of its optical axis (O_{A}).

5. A sensor head according to any one of the preceding claims,
**characterised in that** the radiation screen (10) has a reflection-reducing surface structure and/or surface constitution.

6. A sensor head according to claim 5,
**characterised in that** the radiation screen (10) has a serrated surface structure.

7. A sensor head according to claim 5 or 6,
**characterised in that** the radiation screen (10) is provided with a radiation-absorbing surface coating.

8. A sensor head according to any one of the preceding claims,
**characterised in that** the optical axes (O) of the individual optics (4) are aligned centred on the centre line (A) of the sensor head (2).

9. A sensor head according to any one of the preceding claims,
**characterised in that** the individual optics (4) are connected to an opto-electrical converter via optical fibres (8).

10. A sensor head according to any one of the preceding claims,
**characterised in that** the screen-delimited total range of vision of the sensor head (2) extends over a solid angle of about 90°.

## Revendications

1. Tête de détection optique pour la détection directionnelle de rayonnement optique, composée d'un agencement d'optiques élémentaires dont les axes optiques sont inclinés différemment, qui sont orientées de manière à converger dans le sens de vision et qui présentent des zones de vision coniques se recouvrant partiellement, caractérisée par le fait qu'au moins une optique élémentaire (4A) côté bord extérieur de la tête de détection (2) est munie d'un diaphragme (10) occultant partiellement le cône de vision associé et que l'ouverture d'entrée de lumière (6) de l'optique voisine (4B) plus proche du centre de détecteur est disposée à peu près à la hauteur des rayons marginaux, délimités par le diaphragme, de l'optique élémentaire située côté bord extérieur.

2. Tête de détection suivant la revendication 1, caractérisée par le fait que l'axe optique (O_{B}) de l'optique voisine (4B) est incliné, compte tenu de l'angle d'ouverture (α) du cône de vision, de telle manière que les rayons marginaux inférieurs du cône de vision s'étendent, sans délimitation par le diaphragme, essentiellement suivant la même inclinaison que les rayons marginaux, délimités par le diaphragme, de l'optique (4A) côté bord extérieur.

3. Tête de détection suivant la revendication 1 ou 2, caractérisé par le fait que le diaphragme (10) est situé à l'extérieur de la surface de la tête de détection garnie d'optiques élémentaires (4).

4. Tête de détection suivant l'une des revendications précédentes, caractérisée par le fait que le cône de vision de l'optique élémentaire (4A) côté bord extérieur est occulté par le diaphragme (10) jusqu'à la hauteur de l'axe optique (O_{A}).

5. Tête de détection suivant l'une des revendications précédentes, caractérisée par le fait que le diaphragme (10) présente une structure superficielle et/ou un état de surface réduisant les réflexions.

6. Tête de détection suivant la revendication 5, caractérisée par le fait que le diaphragme (10) présente une structure superficielle en dents de scie.

7. Tête de détection suivant la revendication 5 ou 6, caractérisée par le fait que le diaphragme (10) est muni d'un revêtement superficiel absorbant le rayonnement.

8. Tête de détection suivant l'une des revendications précédentes, caractérisée par le fait que les axes optiques (O) des optiques élémentaires (4) sont dirigés de façon centrée sur l'axe central (A) de la tête de détection (2).

9. Tête de détection suivant l'une des revendications précédentes, caractérisée par le fait que les optiques élémentaires (4) sont reliées par des fibres optiques (8) à un convertisseur opto-électrique.

10. Tête de détection suivant l'une des revendications précédentes, caractérisée par le fait que la zone de vision totale de la tête de détection (2), délimitée par le diaphragme, s'étend sur un angle solide d'environ 90°.
